# EUROPEAN PATENT APPLICATION

(11) **EP 4 382 491 A1**
(43) Date of publication of application: **12.06.2024**
(21) Application number: 22212266.5
(22) Date of filing: 08.12.2022
(51) Int. Cl.: C02F 1/28, C02F 1/66, C02F 1/52, C02F 101/10, C02F 103/10

(54) **METHOD FOR RECOVERING PHOSPHOROUS AND METAL IONS FROM DILUTE AQUEOUS FEEDS USING CEMENTITIOUS ADSORBENTS**

(71) Applicant: PAUL SCHERRER INSTITUT, 5232 Villigen PSI (CH)
(72) Inventor: Testino, Andrea, 5417 Untersiggenthal (CH); PATIL, Ajay Bhagwan, 5200 Brugg (CH); Torrent, Laura, 5234 Villigen (CH)
(74) Representative: Fischer, Michael

(57) **Abstract**

A robust and economically viable technology is developed for the phosphorus (P) and metals recovery from dilute aqueous feeds. This is one of the first efforts to recover P and contaminants from the wastewater streams using adsorbents without the need of incineration and acid leaching of the sludge. P is becoming very critical raw material and nutrient for the agricultural and industrial uses and most of the produced materials are lost in the water bodies. The process technology addresses the P management using the cementitious inorganic adsorbent containing transition and alkali metals like Al, Fe, Mg, Ca, Na and S, but not limited to this. The sequence of interconversion in solution chemistry via inorganic sulphates and hydroxides can produce the economic products such as phosphoric acid and struvite or transition metal salts. The developed technology has the potential for scale up on industrial scale, re-use of components and preconcentration of dilute P and metal contents as well as extended use for recovering from other industrial aqueous feeds after the corresponding optimization. The clear advantage with the claimed process is that it can avoid the use of strong mineral acid and high temperature pyrometallurgical treatments to reach the similar products without negative environmental impact.

## Description

The present invention relates to a method for recovering phosphorus (P) and metal contents in dilute water feeds from different primary and secondary origin.

With foreseen trajectory expected, current 8 billion population of humans will hit the value of 9.8 billion by 2050 and 11.2 billion by 2100. This explosive population growth, continuous urbanization and depletion of forest and cultivable agricultural land puts the entire food supply chain under extreme stress. It is not easy for the agricultural sector to meet the food requirements of population and cities increment without necessary nutrient supply like P. Additionally to agriculture (fertilizer), P is also a key element for lighting, pharma, food, military, civil explosive/fireworks industry. At the moment, P is supplied by few handfuls of countries with limited capacity to expand the production and quality. Out of which only Finland is the European supplier with limited production and great concerns over the environmental impact related to the phosphate mining activities.

This has resulted in the dire food chain supply situation and the requirement of strategic measures on economy, technology, production, and recycling to fulfill the forecast of high demand.

For this reason, P is identified as one of the critical elements by the EU commission and since 2015 by the Swiss parliament.

It is legally binding for all the waste management and wastewater treatment companies in Switzerland to recover P by 2026. There are no industrial and feasible technical solutions available to fulfill this obligation. This is enforced due to the fact that the existing phosphate resources are expected of being depleted rapidly starting from year 2025. Current processes lose more than 80% of P in the value chain. Most of this lost P ends up in the natural water streams or wastewater. Therefore, one way of recovering the P is through aqueous waste streams.

On the production side, P is treated by high temperature and environmentally harsh processes. However, with an ordinance from 2015 and with a transition period of 10 years, P recovery from wastewater stream is mandatory in Switzerland as mentioned above. P needs to be recovered efficiently and without energy demanding processes as well.

It is known in the literature that some solid phases can be used as P capturing materials. For instance, gypsum or calcium silicate hydrate (C-S-H) can adsorb phosphate ions. However, most of these processes have been focused only on P decontamination applications and no systematic technology for recovering P is available so far.

In commercial processes, a high temperature treatment in presence of carbon reduces the P, and the gaseous P compounds are quenched to generate the phosphoric acid. This phosphoric acid is used further as a precursor for fertilizer production. Thermal processes are also used to recover P from sludge or bottom ashes, but they have not showed any economic or environmental viability so far.

In recycling particularly, some processes are based on high acidity leaching of the sludge and ashes from the wastewater treatments and incinerators. The sludge is then re-dissolved in acid. The leachate is further processed by the hydrometallurgy, using a liquid-liquid extraction approach with high amounts of acids and organics as the process components. This methodology has a high cost, limited flexibility, and scalability with high environmental impact.

Therefore, the key pain point or problem in P industry is that there is no process available at room temperature which can be directly scaled up with the environmental-friendly components and increasingly demanding circular economy approaches. Rigorous effort is going around the world to develop the P capturing materials. It is also pointed out that for an efficient process, better adsorbent materials should be used with respect to the existing ones. The ideal adsorbent material should fulfill the following requirements: (1) it should work with ambient temperature conditions; (2) it should use the low value and circularly processed components; and (3) it should be able to perform in case of co-presence of the other contaminants, which is usually the case if wastewater is used as a feed for recycling.

These objectives are achieved according to the present invention by a method for recovering P content in wastewater and/or industrial P containing aqueous waste feeds, comprising the steps of:
a) providing a sulphoaluminate cementitious P adsorbent at room temperature with high purity and crystallinity using alkali and alkaline earth metal precursors;
b) treating the wastewater and/or the industrial P containing aqueous waste feeds to provide a homogeneous aqueous feed solution available for P capture, preferably under removal of solid suspended materials;
c) treating the homogeneous aqueous feed solution containing P with the sulphoaluminate cementitious P adsorbent and thus converting the sulphoaluminate cementitious P adsorbent to a phosphate adduct;
d) removing the phosphate adduct from the homogeneous aqueous feed solution at basic pH level;
e) re-dissolving of the phosphates adduct by using carboxylic acid at 6<pH<8 to provide the new recovered P in solution as phosphate; and
f) removing of Al and other metal components from the homogeneous aqueous feed solution at 6<pH<8 and recycling the Al and other metal components to the provision of the sulphoaluminate cementitious P adsorbent as a circular economy approach.

Thus, the present invention paves a way for a robust and economically viable technology for the phosphorus (P) and the metals recovery from dilute aqueous feeds. This is one of the first efforts to recover P and contaminants from the wastewater streams using adsorbents without the need of incineration and acid leaching of the sludge. The developed technology has the potential for scale up on industrial scale, re-use of components and preconcentration of dilute P and metal contents as well as extended use for recovering from other industrial aqueous feeds after the corresponding optimization. The clear advantage with the present method is that it can avoid the use of strong mineral acids and high temperature pyrometallurgical treatments to reach the similar products without negative environmental impact.

In a preferred embodiment of the present invention, the method steps can be executed substantially at ambient temperature and ambient pressure.

Preferably, the step of providing the sulphoaluminate cementitious P adsorbent can comprise the preparation of the sulphoaluminate cementitious P adsorbent at room temperature with high purity and crystallinity using alkali and alkaline earth metal precursors.

In a further preferred embodiment of the present invention, municipal wastewater and/or sewage sludge leachates and/or aqueous streams can be used as P containing aqueous waste feeds. Additionally, in presence of organic wastes in the P containing aqueous waste feeds, said feeds can be pre-treated in order to transform organic P compounds into inorganic P compounds.

Preferably, ettringite powder is used as the sulphoaluminate cementitious P adsorbent.

Preferred embodiments of the present invention are described hereinafter in more detail with reference to the attached drawings, which depicts in:
- Figure 1: a scheme for the P recovery process from the dilute aqueous feeds from primary and secondary origin.
- Figure 2: a SFTR based reaction system for the preparation of efficient adsorbent for P capture.
- Figure 3: a scanning electron microscopy (SEM) image of the crystalline sulphoaluminate adsorbent material with high surface area;
- Figure 4: an optimized P enrichment by using the adsorbent and comparison with simulations;
- Figure 5: the phosphate conversion to free phosphate ion for its recovery by re-dissolution;
- Figure 6: a free phosphate ion conversion to phosphate fertilizer (struvite);
- Figure 7: XRD pattern refinement of synthetic ettringite;

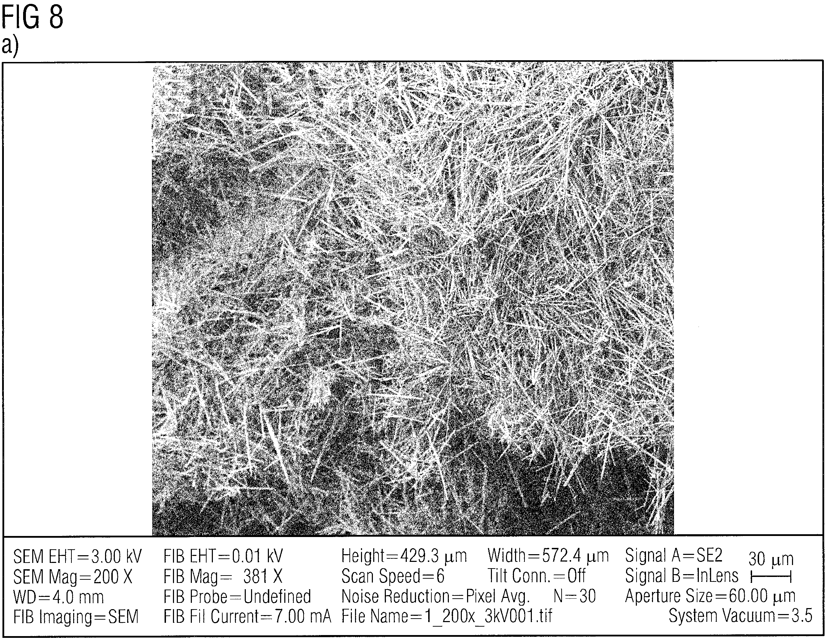

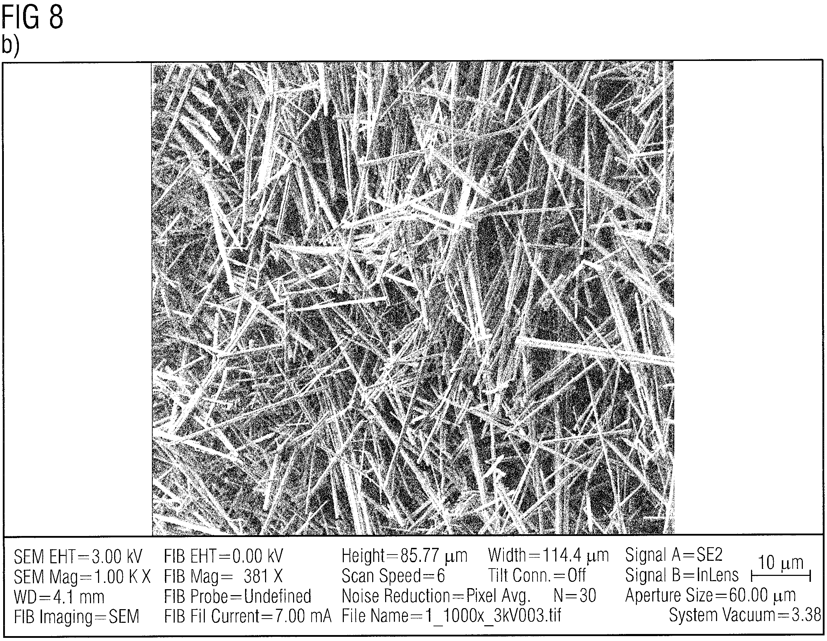

- Figure 8: SEM images of synthetic ettringite at different magnifications: (a) ×200. (b) ×1000;
- Figure 9: amounts of phosphorus captured by ettringite under different pH conditions and per gram of ettringite;
- Figure 10: results of the phosphorus concentration effect on P capturing step. a: phosphorus concentration in supernatant measured by inductively coupled plasma optical emission spectroscopy (ICP-OES); b: amount of precipitated phosphorus in solid calculated; c: amount of precipitated phosphorus per gram of ettringite;
- Figure 11: the amount of phosphorus captured by ettringite under different reaction time conditions and per gram of ettringite;
- Figure 12: the phosphorus (a) and calcium (b) concentrations determined by ICP-OES analysis and by simulations after the phosphorus dissolution step (2nd step of the process). XRD analysis of the solid product from the second step of the phosphorus recovery process (c) ;
- Figure 13: the phosphorus (a) and magnesium (b) concentrations determined by ICP-OES analysis and by simulations after the struvite step (3rd step of the process); XRD analysis of the solid product from the third step of the phosphorus recovery process (c);
- Figure 14: the phosphorus distribution in each step of the phosphorus recovery from the pure Na₂HPO₄ solution; (a) Step 1, (b) Step 2, (c) Step 3;
- Figure 15: the XRD pattern of the solid products in each step; (a) Step 1, (b) Step 2, (c) Step 3;
- Figure 16: Struvite SEM image, which is the final product of the present invention; and
- Figure 17: the scheme of the phosphorus distribution in each step of phosphorus recovery from 20 times diluted realistic wastewater.

The present invention herein discloses the use of sulphoaluminate cementitious materials as the effective P process and adsorbent components. In the process according to the present invention they can eventually be precipitated as phosphate derivates. These phosphates are then further converted to either phosphoric acid or fertilizer precursors.

During the last 5 years at Paul Scherrer Institute (www.psi.ch), the synthesis of such adsorbent materials with high purity and high surface area at several grams scale, in batch and continuous reactors, has been developed. The continuous reactor system exploited in this experimental work for this purpose was a Segmented Flow Tubular Reactor (SFTR). It gave the clear advantage in terms of adsorbent quality, homogeneity, surface area and scale. These synthesized materials were studied as P capturing substrates with outstanding performance up to TRL 4-5 (with surrogate and real materials testing). The present systematic capacity and the adsorption studies with highly purity in-house synthesized materials helped in exploiting the characteristics for the first time in literature.

In addition to the optimized adsorbents, knowledge on phosphate formation by precipitation using simulations and experimental tools has been developed. The clear advance in the present invention is that it is the combination of the basic knowledge, simulations, and the innovative processes to fit the constraints of P resource recovery using circular economy approach. Further chemical process until struvite crystallization has been demonstrated which is one of the most valuable and commercially acceptable fertilizer types in the market. The overall process is based on wet chemistry, the only technology that has demonstrated profitable P recovery pathways with possible applications to wastewater and other contaminated or dilute aqueous feeds.

The capturing/adsorbent materials (e.g. sulphoaluminates) and the P carrier material (e.g. phosphates) are used and internally recycled to demonstrate strong circular economy and environmental-friendly approach. This process is directly scalable on higher feed processing capacity and with variable feed treatment possibilities. Its application to remove contaminants to give high purity fertilizer fulfills the ambitious requirements set by the Swiss law and the new European P directives being drafted at the moment. It can also help to treat the feeds from industrial (pharma, food, and surfactants) and mining activities in the future in an extended portfolio.

The synthetic adsorbent is able to capture P with a kinetics much faster than solid waste due to its high specific surface area and following a controllable pathway toward phosphate derivative. In addition, the synthetic adsorbent is free of metal contaminates, which are a major concern using waste materials. The process has a low energy demand, and the internal materials cycling mitigates the costs of chemicals which is the most demanding economic constraints for wet chemical processes. It also gives possibility of direct scalability which is not possible with thermal processes used around the world. Due to the high purity of the synthetic adsorbent materials, also the final product, struvite, has high purity and is directly usable as fertilizer (e.g. with a low content of heavy metals as prescribed by the legal boundary conditions for the agricultural use), which is not the case for the state of the art processes using waste materials as adsorbent.

The possibility to commercialize non-conventional feeds using the present invention and implementation of circular economy in food and fertilizer industry could create an additional impact, which can be of relevance for the regulatory ambitions on Swiss/EU level.

Another clear advance as compared to conventional approaches and processes is that the processing captures P directly from dilute streams in the wastewater treatment processes and can be integrated with existing wastewater treatment flowsheets. Moreover, there is no need of redissolution of P from sludge and as a result further use of acid, cost and impact will be averted using the present invention.

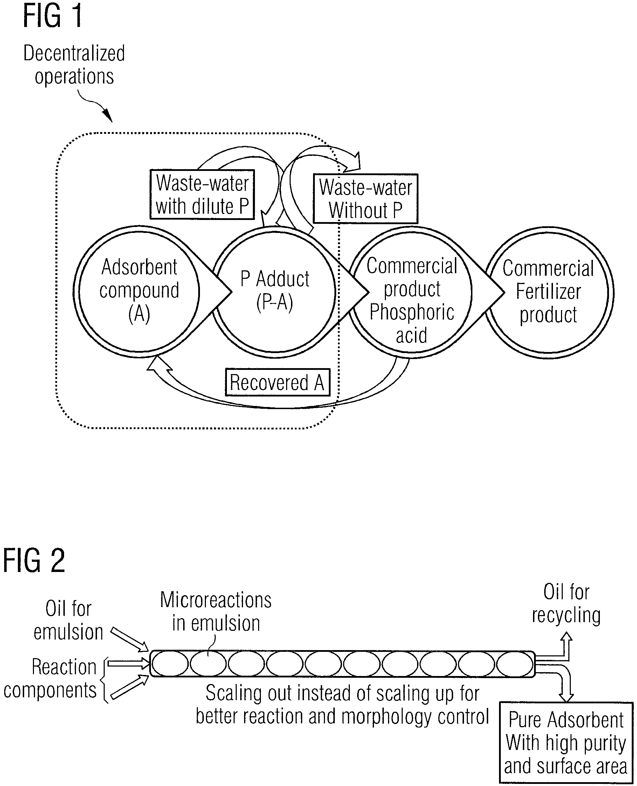

Figure 1 depicts the relevant process steps in terms of a scheme for the P recovery process from the dilute aqueous feeds from primary and secondary origin. To enhance its scalability and taking over the dilute P content issues (see in Table 1), there is the combination of different processing approaches, i.e. the formation of a Phosphorus-Adsorbent adduct (P-A) in decentralized ways and producing further acid and fertilizer with efficiency of scale centrally. This will also give the cost-competitiveness to the method according to the present invention.

**Table 1. List of current constraints in P recovery technologies and advanced opportunities given by the present invention.**

| No. | Challenges | Advantages with the present invention |
|---|---|---|
| 1 | Dilute P content | Adsorbent can adsorb dilute P efficiently |
| 2 | Economic viability | Due to simple process design and ease of operation, high viability |
| 3 | Environmental impact | Process follows circular economy, ambient temperature, and environmental-friendly pathways |
| 4 | High temperature options | Process operates at ambient temperature |
| 5 | Sludge redissolution in acid | Direct P capture from aqueous stream, therefore no need of sludge redissolution |
| 6 | Operational constraints due to limited scalability | Mixed operationality phosphate formation decentralized, acid and fertilizer production centralized |
| 7 | Integration with existing water treatment plants | Fully integration prospects with existing processes |
| 8 | End products quality and pricing | High quality acid and fertilizer as end products |
| 9 | Effect of contaminants | Can handle the loading effects and high selectivity for P |
| 10 | Solution chemistry complexity | It was resolved and optimized using simulation tools |

Figure 2 shows the SFTR based reaction system for the preparation of an efficient adsorbent for the intended P capture.

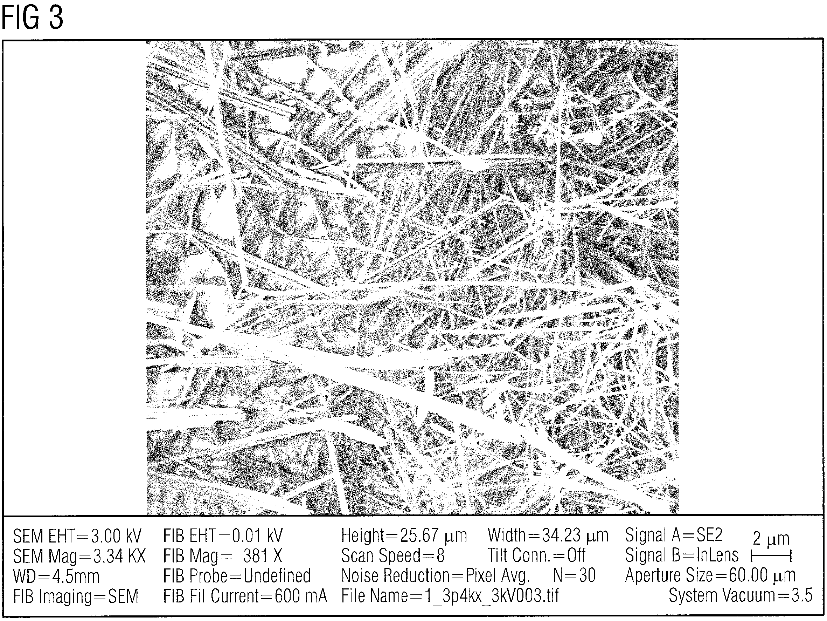

The robust and high-quality P recovery objective is achieved according to the present invention by a wet chemical method with top-down approach from waste to value, comprising the following steps:
a) Preparation of high purity and surface area sulphoaluminate adsorbents using the solution chemistry with formula M_{W}Al_{X}(SO₄)_{Y}·_{z}H₂O, where *M* is alkali and alkaline earth metals, and x-z are the components stoichiometry in the adsorbents;
b) Preparation of the adsorbent using a SFTR by controlling the surface area and the stoichiometry in order to achieve the best and pure material (see Figure 2);
c) Use of these synthesized crystalline adsorbent cementitious materials with high surface area for the recovery of P from aqueous streams (see Figure 3);
d) Segregation of solids and suspended solids from aqueous streams;
e) Conversion of the adsorbent and the diluted P into A-P adduct which is precipitated as phosphate (Mₐ(PO₄)_{b}), where a and b are the component stoichiometries and *M is* alkali or alkaline earth metal;
f) Recycling process of Al by covering it as a basic component from step e);
g) Dissolution of phosphate using oxalate and conversion to phosphoric acid as the commercially acceptable product;
h) Recovery of the component metal M by the excess of oxalate and recycling back as the process component to prepare the adsorbent again in steps a) and b);
i) Optional conversion of the phosphate stream into the fertilizer struvite at neutral pH as the commercially
   acceptable product;
j) Reuse of the aqueous feed using the regular wastewater treatment after recovering the P and avoiding the
   eutrophication caused by waste streams.

These method steps provide a recovery of the P content in dilute aqueous streams at a commercially acceptable and high level of purity products. These acceptable recoveries were achieved after an optimization process of the method, where the pH, the adsorbent P capturing capacity and the reaction time were assesses (see Table 2).

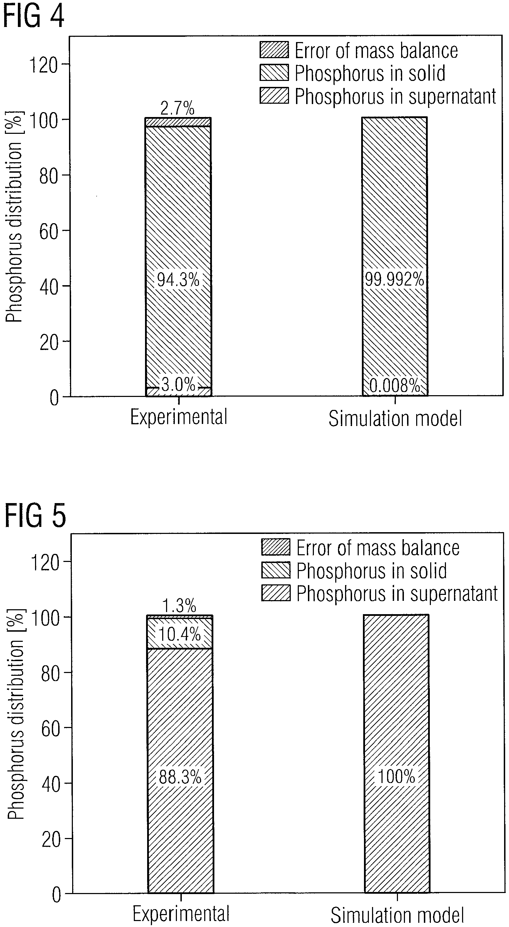

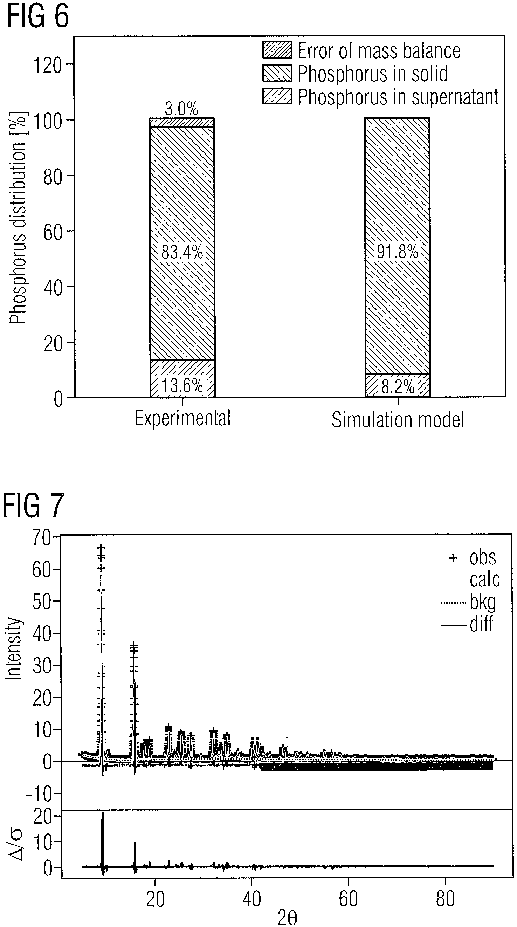

While Figure 3 shows a scanning electron microscopy (SEM) image of the crystalline sulphoaluminate adsorbent material with high surface area, Figure 4 shows an optimized P enrichment by using the adsorbent and comparison with simulations. Subsequently, Figure 5 depicts the phosphate conversion to free phosphate ion for its recovery by redissolution. Figure 6 shows the free phosphate ion conversion to phosphate fertilizer (struvite).

**Table 2. P precipitation under different process conditions.**

| **Studied parameters** | **pH** | **Reaction time (min)** | **Initial P (mol-L⁻¹)** | **Precipitated P (%)** |
|---|---|---|---|---|
| pH | 9 | 2880 | 0.0056 | 5.0% |
| | 10 | 2880 | 0.0056 | 3.5% |
| | 11 | 2880 | 0.0056 | 1.1% |
| | 13 | 2880 | 0.0056 | 2.7% |
| Initial P concentration (mol·L⁻¹) | 10 | 2880 | 0.0058 | 0.91% |
| | 10 | 2880 | 0.0133 | 51.66% |
| | 10 | 2880 | 0.0165 | 58.98% |
| | 10 | 2880 | 0.0219 | 63.19% |
| Reaction time (min) | 10 | 15 | 0.0056 | 72.41% |
| | 10 | 30 | 0.0056 | 66.11% |
| | 10 | 60 | 0.0056 | 60.01% |
| | 10 | 2880 | 0.0056 | 3.5% |

**Table 3. Percentages of P in the different steps of the scaling-up proposed wet chemical removal/recovery/recycling process.**

| | **P in supernatant (%)** | **P in solid (%)** | **Error of mass balance** |
|---|---|---|---|
| **STEP 1** | 9.16 | 99.34 | 8.50 |
| **STEP 2** | 84.79 | 13.88 | 1.33 |
| **STEP 3** | 5.48 | 96.76 | 2.24 |

| | | | |
|---|---|---|---|
| [P] yield of the whole process = 81.5% | | | |

Comment: In Table 3, the relatively low P recovery yield for the overall process is mainly due to the low value obtained for the second step. This is because the process has been optimised considering HAP, but ACP was obtained experimentally. Therefore, the amount of oxalic acid in step 2 needs to be optimized, as done in the example of Table 4.

**Table 4. Percentages of P in the supernatant in the different steps of the proposed wet chemical P removal/recovery/recycling process from a simulated wastewater.**

| | **P in supernatant (%)** |
|---|---|
| **STEP 1** | <LOD* |
| **STEP 2** | 94.91 |
| **STEP 3** | 3.36 |

| | |
|---|---|
| *LOD = limit of detection. [P] yield of the whole process = 91.7%. | |

According to the present invention to accomplish the solution or wet chemistry operations on the aqueous streams it is first necessary to do the segregation of suspended particles and solids which is also the requirement of traditional wastewater treatment processes in order to arrive at a homogeneous feed solution.

The process according to the wastewater or industrial P containing secondary feeds comprises the following steps as it is shown in Figure 1:
1. Preparation of sulphoaluminate cementitious adsorbents with variable stoichiometry with alkali or alkaline earth metals. The resulting product should be with high surface area and high crystallinity.
2. Treatment of dilute P aqueous solution with the sulphoaluminate adsorbents at ambient temperature and basic pH conditions.
3. Removal of the aluminium and recycling for the adsorbent preparation stage.
4. Conversion of the adsorbed phosphate into phosphate stream by dissolution of phosphate P-A adduct using oxalic acid at a neutral pH and metal component recycled to the adsorbent preparation stage again.
5. Recovery of water depleted with P content to the general treatment flowsheet further and reuse in civil or industrial use without eutrophication hazard.
6. Conversion of the phosphate stream to the struvite fertilizer containing ammonium and magnesium.

Therefore, the present invention discloses an exclusive approach to recover >90% P content from wastewater or industrial waste aqueous feed fractions using an efficient and optimized wet chemical process from secondary resources, which otherwise cause the environmental concerns along with P losses. The approach also yields the environmental-friendly and safe treatment of metal contents, which can be excluded by the adsorbent and can be pre-concentrated and treated without contamination of the P. Thus, being able to meet the legal standards set for the fertilizer use. Cost effective recycling process for P with commercial acceptable purities has been developed without use of any heating step or use of any strong mineral acid contents. The wastewater streams have been successfully exploited as the potential secondary resource. The test was performed on waste from civil or industrial use coming for general treatments. However, other residues from specialized industry and mining tailing dams can also be processed with this methodology to obtain pure P fractions after certain optimizations with the aim to produce the required phosphoric acid or struvite fertilizer.

In the following section, a more detailed description on the methods and the materials that can be applied within the scope of the present invention is given and also gives a few more insights into the benefits that can achieved with the present invention:

### Materials and Methods

In the loop process for the P capturing materials, the materials of these four reactions, calcium chloride & aluminium sulphate aqueous, ettringite powders, , and Na₂HPO₄ aqueous, are all the products from the previous step (see Figure 7). However, in the individual experiments of each step, the materials are all commercial regents. Besides, other auxiliary materials, sodium hydroxide, hydrochloric acid, oxalic acid, magnesium oxide, and ammonium hydroxide, are used.

The ettringite used to remove and capture phosphate is synthesized by the recycled solutions of CaCl₂ and Al₂(SO₄)₃ in the phosphorus-close loop process (see Figure 1). In the initial ettringite synthesis, CaCl₂·2H₂O and Al₂(SO₄)₃·18H₂O were mixed at molar ratio ([Ca²⁺] : [Al³⁺] : [SO₄^{2~}]) of 1:2.5:3.75 in water. NaOH was used to adjust the alkaline conditions (pH≈12.5). XRD and SEM analysis of the synthetic ettringite shows the high-quality materials with 100% XRD purity **(Fehler! Verweisquelle konnte nicht gefunden werden.** and **Fehler! Verweisquelle konnte nicht gefunden werden.).**

The source of phosphorus in this example is a phosphate-rich effluent of glyphosphate wastewater treated by supercritical water oxidation (SCWO). The high concentration of organic phosphorus in glyphosate wastewater is oxidized and degraded into inorganic phosphate in the oxidative environment of supercritical water, which is recovered from the processing aqueous feed by using ettringite. The inorganic salt composition of the processing effluent is mainly 14.0% Na₂HPO₄ and 4.0% NaCl. In the experiments of phosphorus recovery from realistic wastewater, as the feed material, the mixed solution of 14.0% Na₂HPO₄ and 4.0% NaCl is used to simulate this kind of wastewater.

### Experiment method and procedure

There are three steps of reactions studied in this experimental work: phosphate capture, phosphate purification, and struvite synthesis. This study was carried out in small scale reactor (100 mL).The experiments were carried out at constant temperature (T=25 °C).

All the experiments were undertaken to assess the impact of solution factors on phosphate removal capacity in the first step and improve the phosphorus recovery yield in the loop process. In series of step-I experiments, we studied the phosphorus capture capacity of ettringite under different solution factors, e.g., pH, ettringite amount, phosphate concentration, and reaction time. The chemical reaction of phosphate captured by ettringite with hydroxyapatite formation is: 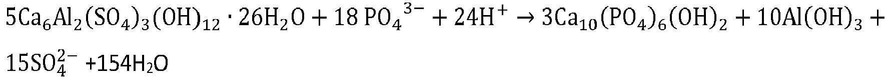 Or in a more generic form:

Calcium aluminate sulfate + phosphate ions -> calcium phosphate + aluminum hydroxide + sulfate ions

Nevertheless, since both ettringite and calcium phosphate can vary stoichiometry in a quite large range, the reaction can be generalized as:

Calcium aluminate sulfate (s) + phosphate ions (aq) -> calcium phosphate (s) + aluminium hydroxide (s) + sulfate ions (aq)

which is carried out at alkaline pH.

In series of step-II experiments, phosphate purification from the commercial nano-HAP or HAP/ACP products of step-I by using oxalic acid is studied. Phosphate in solid is dissolved into liquid phase. The chemical reaction is:

Ca₁₀(PO₄)₆(OH)₂ + 10H₂C₂O₄ + 180H⁻ → 10CaC₂O₄ · H₂O+ 6PO₄³⁻ + 10H₂O

or more generic:

Calcium phosphate (s) + Oxalic acid (aq) -> Calcium oxalate(s) + phosphate ions (aq)

which is carried out at neutral pH.

In series of step-III experiments, struvite is precipitated from mixed solutions of sodium phosphate, ammonia, and magnesium chloride. The chemical reaction is:

PO₄³⁻ + NH₄OH + Mg²⁺ + H⁺ + 5H₂O → Mg(NH₄)PO₄ ▪ 6H₂O

or more generic:

phosphate ions (aq) + ammonium hydroxide (aq) + magnesium ion (aq) -> struvite (s)

which is conducted at slightly alkaline pH.

At the end of each test, the samples contained precipitated solids and the liquid phase was collected for further analysis. The precipitate was filtered through 0.45 µm filters, dried at room temperature and then characterized via XRD and SEM. The supernatant was collected by centrifugation and filtered to analyze the concentration of each concerned element byICP-OES.

After assessing the impact of solution factors on phosphate removal capacity and improving the phosphorus recovery yield in the loop process, the experiments of the complete loop process were carried out at larger scale (3L).

### Results

Effect of solution factors on phosphorus capturing:
Effect of pH in the process:
In this section the results of the effect of pH on P capturing (1st step of the process) are shown (see Table 5).

**Table 5. Experimental conditions on the tests performed for the pH effect evaluation in P capturing step.**

| **factor** | **Reaction pH** | **Reaction time** | **Initial phosphorus** | | **Phosphorus distribution** | | **[p] capture capacity (P/ettringite)** |
|---|---|---|---|---|---|---|---|
| | | | **Concentration (mol ·L⁻¹)** | **Amount (mg)** | **Remain in liquid** | **Precipitate in solid (%)** | |
| **pH** | 9 | 2880 | 0.0056 | 8.68 | 5.00 | 8.25 | 80.84 |
| | 10 | 2880 | 0.0056 | 8.68 | 3.50 | 8.28 | 82.79 |
| | 11 | 2880 | 0.0056 | 8.68 | 1.13 | 8.58 | 84.13 |
| | 12 | 2880 | 0.0056 | 8.68 | 1.24 | 8.57 | 85.54 |
| | 13 | 2880 | 0.0056 | 8.68 | 2.69 | 8.45 | 84.30 |

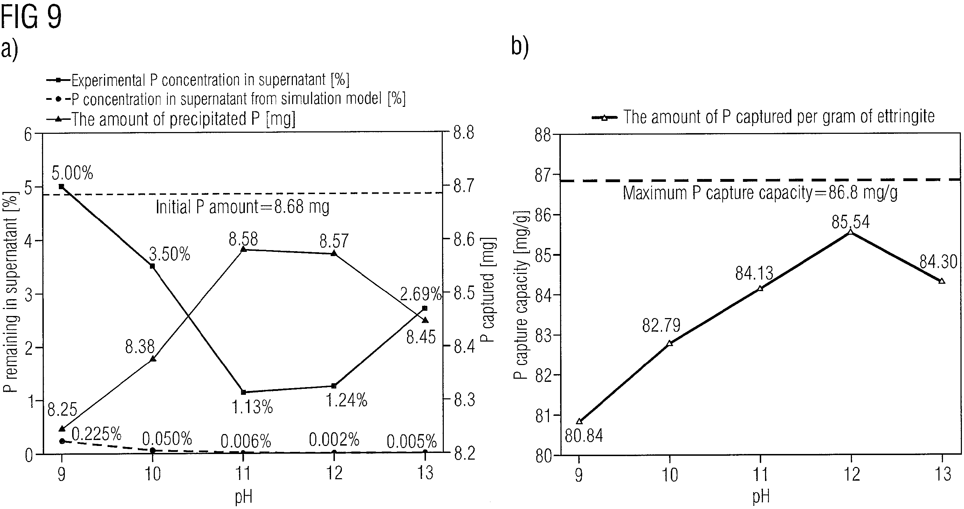

In Figure 9 is represented the amounts of phosphorus captured by ettringite under different pH conditions and per gram of ettringite.

Effect of P concentration in the process:
In this section the results of the effect of phosphorus concentration on the P capturing (1st step of the process) are presented (see Table 6).

**Table 6. Experimental conditions on the tests performed for the phosphorus concentration effect evaluation in P capturing step.**

| **Reaction factor** | **pH** | **Reaction time (min)** | **Initial phosphorus** | | **Phosphorus distribution** | | **[P] capture capacity (P/ettringite)** |
|---|---|---|---|---|---|---|---|
| | | | **Concentration (mol ·L⁻¹)** | **Amount (mg)** | **Remain in liquid (%)** | **Precipitate in solid (%)** | |
| **pH** | 10 | 2880 | 0.0011 | 1.63 | - | - | 16.3 |
| | 10 | 2880 | 0.0020 | 3.16 | - | - | 31.3 |
| | 10 | 2880 | 0.0030 | 4.70 | 0.69 | 0.032 | 46.4 |
| 10 | 2880 | 0.0039 | 6.09 | 0.13 | 0.008 | 60.5 | |
| 10 | 2880 | 0.0048 | 7.46 | 0.49 | 0.037 | 73.1 | |
| 10 | 2880 | 0.0058 | 9.02 | 0.91 | 0.082 | 88.7 | |
| 10 | 2880 | 0.0062 | 9.60 | 1.81 | 0.174 | 93.9 | |
| 10 | 2880 | 0.0086 | 13.31 | 18.77 | 2.500 | 107.8 | |
| 10 | 2880 | 0.0101 | 15.64 | 29.09 | 4.551 | 110.8 | |
| 10 | 2880 | 0.0133 | 20.62 | 51.66 | 10.653 | 99.3 | |
| 10 | 2880 | 0.0165 | 25.50 | 58.98 | 15.039 | 103.7 | |
| 10 | 2880 | 0.0219 | 34.00 | 63.19 | 21.477 | 124.5 | |

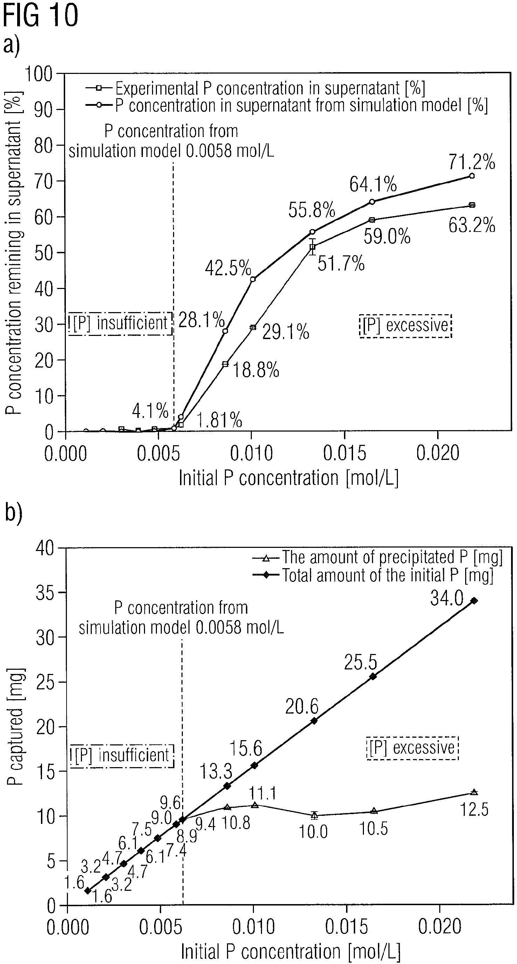

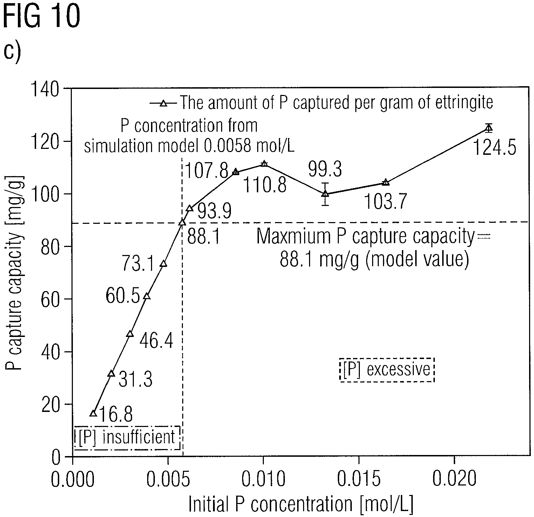

Figure 10 shows the result of the phosphorus concentration effect on P capturing step. a: phosphorus concentration in supernatant measured by ICP-OES; b: amount of precipitated phosphorus in solid calculated; c: amount of precipitated phosphorus per gram of ettringite.

### 3.1.3 Kinetic study of phosphorus capturing

In this section, the results of the effect of reaction time on P capturing (1st step of the process) are shown (see Table 7).

**Table 7. Experimental conditions of the tests performed for the phosphorus concentration effect, evaluation in P capturing step.**

| **Reaction factor** | **pH** | **Reaction time (min)** | **Initial phosphorus** | | **Phosphorus distribution** | | **[P] capture capacity (P/ettringite)** |
|---|---|---|---|---|---|---|---|
| | | | **Concentration (mol ·L⁻¹)** | **Amount (mg)** | **Remain in liquid (%)** | **Precipitate in solid (%)** | |
| **pH** | 10 | 15 | 0.0056 | 8.68 | 72.41 | 2.57 | 25.58 |
| | 10 | 30 | 0.0056 | 8.68 | 66.11 | 3.15 | 31.42 |
| | 10 | 60 | 0.0056 | 8.68 | 60.01 | 3.72 | 37.10 |
| | 10 | 120 | 0.0056 | 8.68 | 48.52 | 4.79 | 47.57 |
| | 10 | 240 | 0.0056 | 8.68 | 36.46 | 5.91 | 58.99 |
| 10 | 480 | 0.0056 | 8.68 | 27.64 | 6.73 | 67.30 | |
| 10 | 960 | 0.0056 | 8.68 | 21.00 | 7.34 | 73.45 | |
| 10 | 1440 | 0.0056 | 8.68 | 13.13 | 8.08 | 80.71 | |
| 10 | 2880 | 0.0056 | 8.68 | 3.55 | 8.37 | 83.56 | |

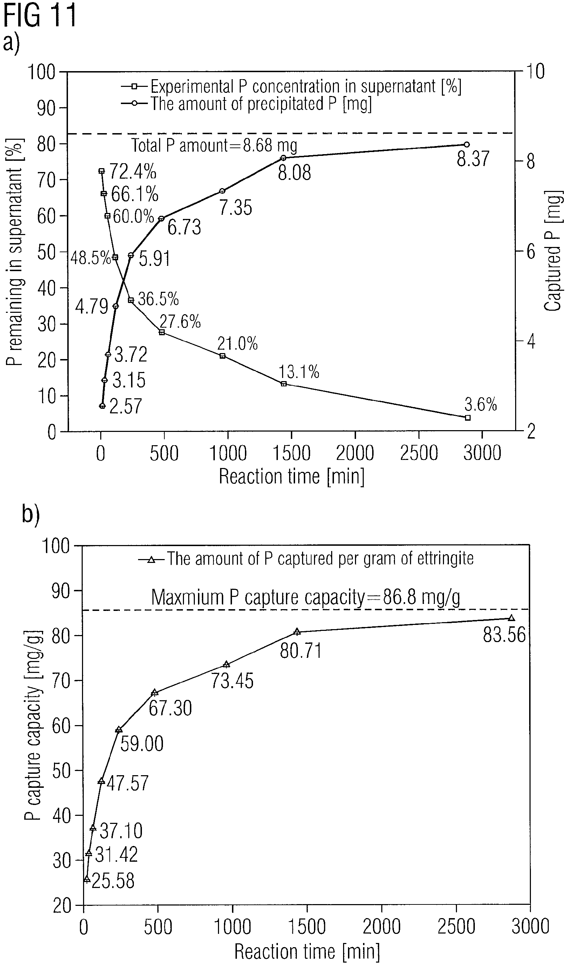

Figure 11 shows the amount of phosphorus captured by ettringite under different reaction time conditions.

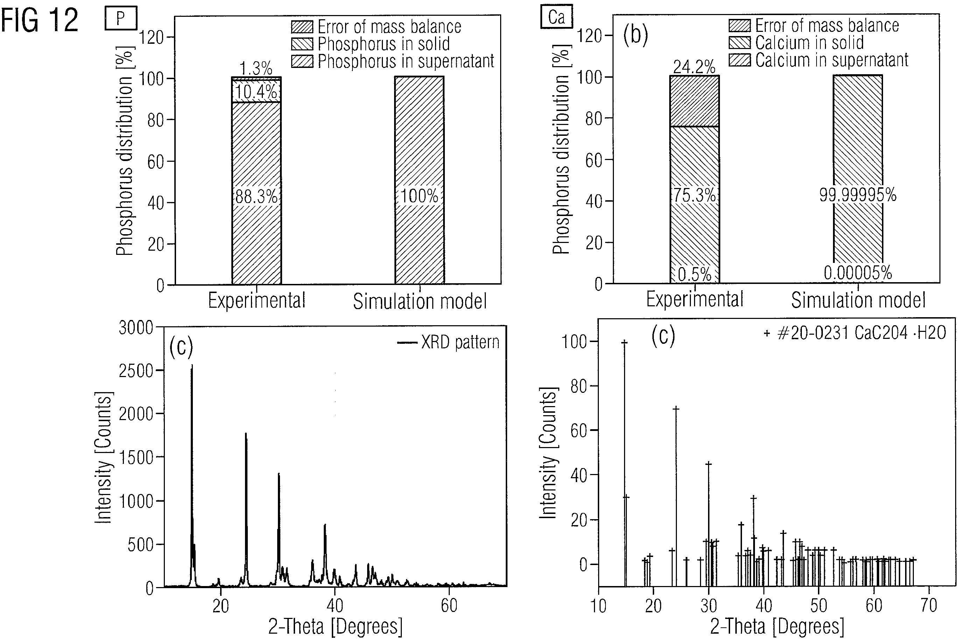

Phosphorus dissolution and struvite synthesis for phosphorus recycling:
In this section it will be presented the results of phosphorus dissolution step (2nd step of the process) and the struvite synthesis step (3rd step of the process). Figure 12 shows the phosphorus (a) and calcium (b) concentrations determined by ICP-OES analysis and by simulations after the phosphorus dissolution step (2nd step of the process). XRD analysis of the solid product from the second step of the phosphorus recovery process (c).

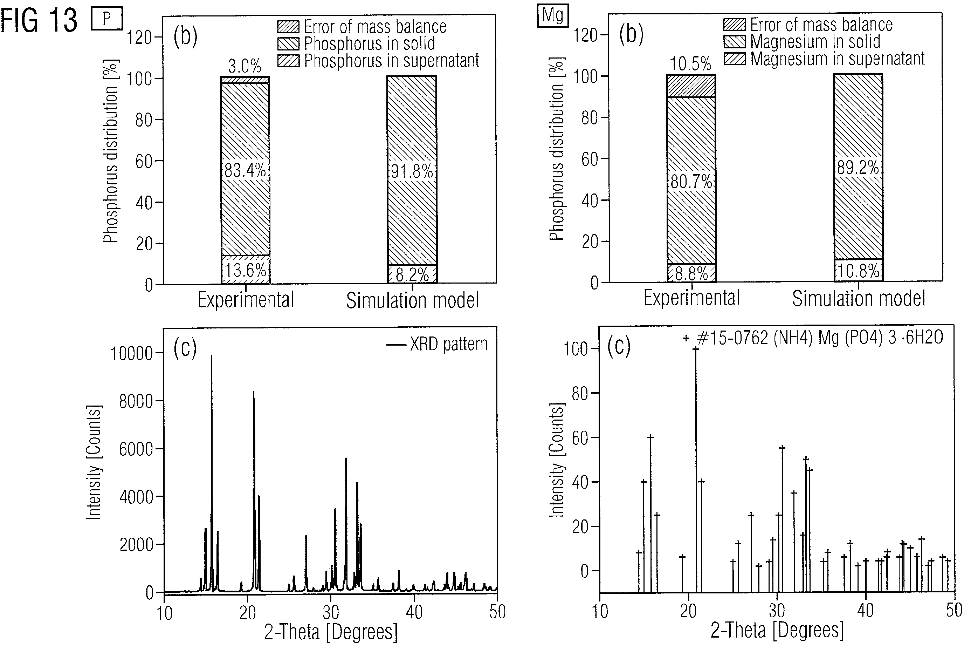

Figure 13 illustrates the phosphorus (a) and magnesium (b) concentrations determined by ICP-OES analysis and by simulations after the struvite step (3rd step of the process). XRD analysis of the solid product from the third step of the phosphorus recovery process (c).

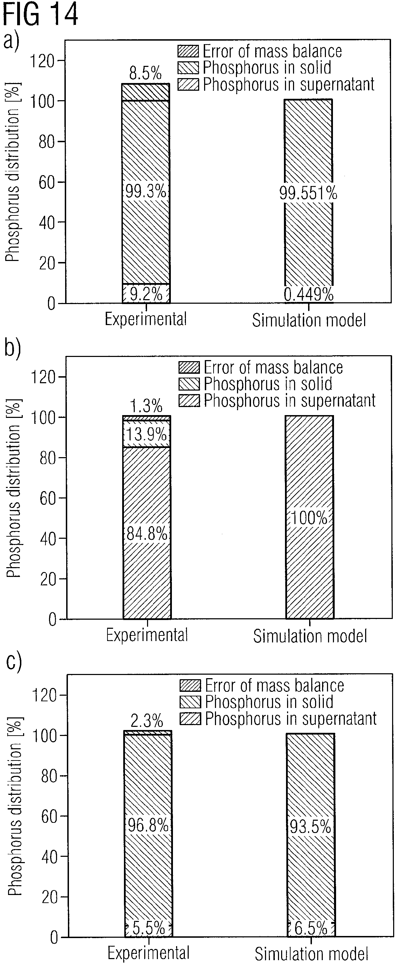

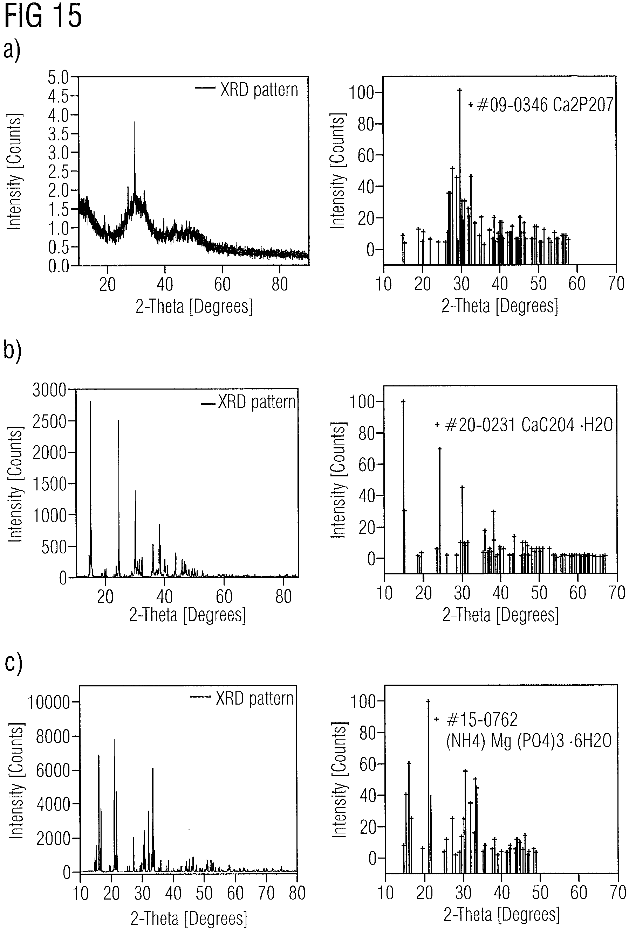

Phosphorus recovery from the phosphate solution:
In this section, the phosphorus yield of the recovery from the pure phosphate solutions is discussed. In this experiment, 2.0 g ettringite was first used to remove phosphate from Na₂HPO₄ solution (0.0029 mol/L, 2L). After filtration and phase separation, aqueous sample was analysed by ICP-OES, where 90.94% of phosphorus and 98.42% of calcium precipitated. After complete dry, the solid phase was identified as amorphous calcium phosphate (ACP) by XRD analysis. Although the solid product of step-I reaction is not the expected HAP, ACP may react even better in step-II because of its higher dissolution rate. Figure 14 shows the phosphorus distribution in each step of the phosphorus recovery from the pure Na₂HPO₄ solution. (a) Step 1. (b) Step 2. (c) Step 3. Figure 15 shows the XRD pattern of the solid products in each step. (a) Step 1. (b) Step 2. (c) Step 3.

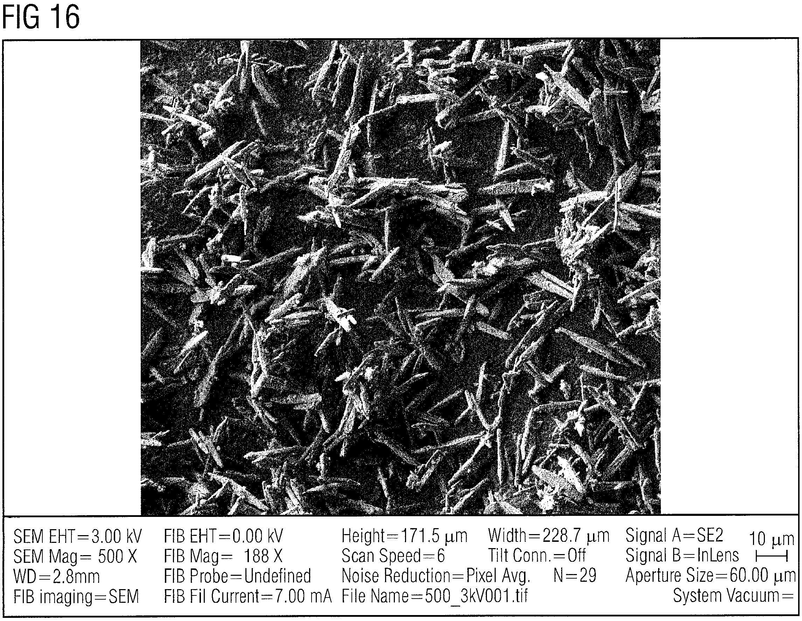

Figure 16 is a SEM image of the final product of the whole process, which is the fertilizer (struvite).

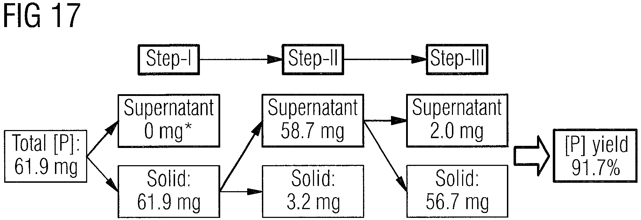

Phosphorus recovery from high-concentration realistic wastewater:
This section presents the yield of phosphorus recovery from the high concentration realistic wastewater. Table 8 describes the composition of the realistic wastewater. Figure 17 shows the scheme of the phosphorus distribution in each step of phosphorus recovery from 20 times diluted realistic wastewater.

**Table 8. Salt composition in the realistic wastewater for preparing the simulated one(diluted X10 or X20 times).**

| **Realistic processing wastewater composition** | | | |
|---|---|---|---|
| Na₂HPO₄ [wt.%] | NaCl [wt.%] | NaNO₃ [wt.%] | Na₂SO₄ [wt.%] |
| 14.0 | 4.0 | 0.67 | 0.23 |

## Claims

1. A method for recovering P content in wastewater and/or industrial P containing aqueous waste feeds, comprising the steps of:
a) providing a sulphoaluminate cementitious P adsorbent at room temperature with high purity and crystallinity using alkali and alkaline earth metal precursors;
b) treating the wastewater and/or the industrial P containing aqueous waste feeds to provide a homogeneous aqueous feed solution available for P capture, preferably under removal of solid suspended materials;
c) treating the homogeneous aqueous feed solution containing P with the sulphoaluminate cementitious P adsorbent and thus converting the sulphoaluminate cementitious P adsorbent to a phosphate adduct;
d) removing the phosphate adduct from the homogeneous aqueous feed solution at basic pH level;
e) re-dissolving of the phosphates adduct by using carboxylic acid at 6<pH<8 to provide the new recovered P in solution as phosphate; and
f) removing of Al and other metal components from the homogeneous aqueous feed solution at 6<pH<8 and recycling the Al and other metal components to the provision of the sulphoaluminate cementitious P adsorbent as a circular economy approach.

2. The method according to claim 1, wherein the methods steps are executed at ambient temperature and/or ambient pressure.

3. The method according to claim 1 or 2, wherein the step of providing the sulphoaluminate cementitious P adsorbent comprises the preparation of the sulphoaluminate cementitious P adsorbent at room temperature with high purity and crystallinity, using alkali and alkaline earth metal precursors.

4. The method according to any of the preceding claims, wherein municipal wastewater and/or sewage sludge leachates and/or aqueous streams are used as P containing aqueous waste feeds.

5. The method according to claim 4, wherein in presence of organic wastes in the P containing aqueous waste feeds, said feeds are pre-treated in order to transform organic P compounds into inorganic P compounds.

6. The method according to any of the preceding claims, wherein industrial wastewater and/or mining tailings and/or primary mining feeds are used as P containing aqueous waste feeds.

7. The method according to any of the preceding claims, wherein as the sulphoaluminate cementitious P adsorbent ettringite powder is used.
